# EUROPÄISCHE PATENTSCHRIFT

(11) **EP 1 945 708 B1**
(45) Veröffentlichungstag und Bekanntmachung des Hinweises auf die Patenterteilung: **04.08.2010**
(21) Anmeldenummer: 06806219.9
(22) Anmeldetag: 12.10.2006
(51) Int. Cl.: C08K 5/5313, C08K 5/3492, C08L 67/02

(54) **HALOGENFREIE FLAMMGESCHÜTZTE THERMOPLASTISCHE POLYESTER**
HALOGEN-FREE FLAME-RETARDANT THERMOPLASTIC POLYESTER
POLYESTER THERMOPLASTIQUE IGNIFUGE NE CONTENANT PAS D HALOGENE

(30) Priorität: 25.10.2005 DE 102005050956
(43) Veröffentlichungstag der Anmeldung: 23.07.2008
(73) Patentinhaber: LANXESS Deutschland GmbH, 51369 Leverkusen (DE)
(72) Erfinder: ENDTNER, Jochen, 50679 Köln (DE); BIENMÜLLER, Matthias, 47803 Krefeld (DE); WANDERS, Martin, 51519 Odenthal (DE)
(86) Internationale Anmeldenummer: PCT/EP2006/009860
(87) Internationale Veröffentlichungsnummer: WO 2007/048509

(56) Entgegenhaltungen:
- WO-A-99/67326

## Beschreibung

Die vorliegende Erfindung betrifft halogenfrei flammgeschützte thermoplastische Polyester mit UL94V0-Klassifizierung und besonders guten mechanischen Eigenschaften sowie hoher Kriechstromfestigkeit.

Der UL 94-Test wurde vom Underwriter Laboratory in USA entwickelt und befasst sich mit der tropfenden Polymer-Schmelze. Eine vertikal angeordnete Probe (127 mm x 12,7 mm x 12,7 mm) wird dabei mit einem Bunsenbrenner (Flamme 19 mm) gezündet (10 Sekunden). Erlischt die Flamme nach weniger als 30 Sekunden, wird nochmals 10 Sekunden gezündet. Bei der zweiten Zündung sind zu leicht verdampfende Flammschutzmittel schon verbraucht und die beim Brennen entstehende Polymer-Schmelze tropft auf Baumwollwatte. Wird diese durch die brennende Schmelze nicht gezündet und brennt die Probe weniger als 5 Sekunden, wird sie mit UL94V0 charakterisiert. Bei gleicher Brennzeit, aber brennender Baumwollwatte wird von UL94V2 gesprochen.

Aufgrund ihrer chemischen Zusammensetzung sind viele Kunststoffe leicht brennbar. Um die von Kunststoffverarbeitern und teilweise vom Gesetzgeber geforderten hohen Flammschutzanforderungen erreichen zu können, müssen Kunststoffe daher in der Regel mit Flammschutzmitteln ausgerüstet werden. Hierzu sind eine Vielzahl unterschiedlicher Flammschutzmittel und Flammschutzmittelsynergisten bekannt und auch kommerziell erhältlich. Aufgrund der vorteilhafteren Brandnebenerscheinungen bezüglich Rauchgasdichte und Rauchgaszusammensetzung sowie aus ökologischen Gründen werden nicht-halogenierte Flammschutzmittelsysteme seit einiger Zeit bevorzugt eingesetzt.

Unter den nicht-halogenierten Flammschutzmitteln haben sich für thermoplastische Polyester insbesondere die Salze von Phosphinsäuren (Phosphinate) als besonders wirksam erwiesen. So wurden unter DE-A-2252258 (= US 3 900 444) Alkalisalze von Phosphinsäuren wie Natriumdimethylphosphinat bzw. Dinatriumethylenbis(methylphosphinat) als wirksame Flammschutzmittelkomponenten beschrieben. Diese müssen aber in Mengen bis zu 30 Gew.-% eingebracht werden und zeigen zum Teil einen ungünstigen korrosionsfördernden Einfluss auf die Verarbeitungsmaschinen.

Weiterhin sind in thermoplastischen Polyestern die Salze von Phosphinsäuren mit einem Metall der zweiten oder dritten Haupt- oder Nebengruppe des Periodensystems eingesetzt worden. Sie zeichnen sich gegenüber anderen halogenfreien Flammschutzmitteln wie z.B. Triphenylphosphat, Resorcin-bis-(diphenylphosphat) (RDP) oder Bisphenol-A-bis(diphenylphosphat) (BDP) insbesondere durch gute Eigenschaften nach Wärmealterung aus (US-A-2005 013 7297)

Auch Kombinationen der genannten Phosphinsäuresalze mit stickstoffhaltigen Flammschutzmittelsynergisten (EP-A-0 006 568) wurden beschrieben, wobei sich bestimmte Stickstoffverbindungen mit höherer Temperaturstabilität und geringerer Flüchtigkeit wie z.B. Melamincyanurat, Melaminphosphat, Benzoguanamin, Dimelaminphosphat, Tris(hydroxyethyl)isocyanurat, Allantoin, Glycouril, Melaminpyrophosphat und Harnstoffcyanurat als besonders vorteilhaft erwiesen haben (EP-B-0892829/US 6 365 071).

Unter den genannten Phosphinsäuresalzen haben sich organische Calcium- und Aluminiumphosphinate wie z.B. Calcium-bis[ethylmethylphosphinat] oder Aluminium-tris[ethylmethylphosphinat] insbesondere auch im Vergleich zu Zinkphosphinaten hinsichtlich der Flammschutzwirkung als besonders wirksam erwiesen (EP 0 699 708 B1/US 5 780 534).

Bei den genannten Calcium- und Aluminiumphosphinaten handelt es sich allerdings um Feststoffe, die - im Gegensatz zu einigen Zinkphosphinaten - bei den üblichen Verarbeitungsbedingungen nicht aufschmelzen (EP-A-1 454 912/US 2 004 176 506). Dadurch wird eine homogene Einarbeitung in Formmasse sehr erschwert. Dies führt einmal dazu, dass der Einsatz in dünnwandigen Artikeln wie Filmen, Folien und Fasern oder aber partiell dünnwandigen Bauteilen stark limitiert ist. Auch bleiben die mechanischen Eigenschaften der mit Calcium- oder Aluminiumphosphinaten flammgeschützten Polyester insbesondere hinsichtlich der für den Elektrobereich besonders wichtigen Eigenschaften Dehnung (Zugversuch nach ISO527 bzw. Biegeversuch nach ISO178) und Schlagzähigkeit (z.B. ISO180) weit hinter denen üblicher halogenhaltiger Vergleichsprodukte zurück. Der Feststoffcharakter der genannten Phosphinate kann sich darüber hinaus auch negativ auf die Schmelzviskosität der Formmasse auswirken. Kritisch muss auch angemerkt werden, dass auch bei hoher Dosierung, z.B. 20% Aluminiumtris(ethylmethylphosphinat) in einer mit 30% Glasfasern verstärkten Polyesterrezeptur nur Kriechstromfestigkeiten deutlich unterhalb von 600V beschrieben werden (EP-B-0 794 220).

In US-A-2005 013 7297 wird in einem anderen Zusammenhang eine flammgeschützte Polyesterrezeptur genannt, die neben Zinkphosphinat und einem stickstoffhaltigen Flammschutzmittel wie z.B. Melamincyanurat noch 0,1 bis 15% eines kohlebildenden Polymers, vorzugsweise auf Basis von Polyetherimiden oder Polyphenylensystemen enthält. Allerdings werden auch hier bei Rezepturen mit z.B. 30 Gew.-% Glasfaserverstärkung und UL94-V0 (1,6mm) Klassifizierung nur Schlagzähigkeiten mit maximal 30kJ/m² nach IZOD ISO 180/IU angegeben. Für Rezepturen mit UL94 V0 bei 0,8mm sinkt die Schlagzähigkeit sogar auf Werte unterhalb von 23kJ/m², was einen breiten Einsatz sehr einschränkt. UL-94-V0 ist ein genormtes Testverfahren zum Testen der Flammwidrigkeit, das im Abschnitt Beispiele genauer beschrieben wird.

Aus WO 99/67326 sind flammgeschützte Polyesterformmassen bekannt, die A) 5 bis 96 Gew.-% eines Polyesters, B) 1 bis 30 Gew.-% einer Stickstoffverbindung, C) 1 bis 30 Gew.-% einer anorganischen Phosphorverbindung und D) 1 bis 30 Gew.-% einer organischen Phosphorverbindung enthalten.

Aufgabe der vorliegenden Erfindung war es daher, eine halogenfrei flammgeschützte Polyesterrezeptur mit einem unter üblichen Verarbeitungsbedingungen aufschmelzbaren Metallphosphinat zur Verfügung zu stellen, um daraus Formteile herzustellen, die neben einer UL94-V0 Klassifizierung bei mindestens 1,6 mm Wandstärke auch gute mechanische und elektrische Eigenschaften zeigen, wobei Kriterien wie Schlagzähigkeit (IZOD nach ISO 180 1/U > 30 kJ/m²), Randfaserdehung (> 2,2% nach ISO 178) und Kriechstromfestigkeit (CTI A von 600V) von besonderer Bedeutung sind. Weiterhin war es Aufgabe der vorliegenden Erfindung, dass die GWIT-Prüfung nach IEC 60695-2-13 bei einer Glühdrahttemperatur von mindestens 750°C reproduzierbar bestanden wird.

Die GWIT-Prüfung nach IEC 60695-2-13 ist ein genormter Test für die Glühdrahtbeständigkeit und wird im Abschnitt Beispiele genauer beschrieben.

Es wurde nun überraschend gefunden, dass die gewünschten Eigenschaften weitestgehend realisiert werden können, wenn die Polyesterformmassen neben einer speziellen Kombination aus aufschmelzbarem Metallphosphinat und stickstoffhaltigen Flammschutzmitteln auch eine spezielle Mischung aus Polybutylenterephthalat und mindestens einem weiteren thermoplastischen Polyester verschieden von Polybutylenterephthalat enthalten, wobei bestimmte anorganische Metallsalze eine zusätzliche Verbesserung der Eigenschaften bewirken können.

Gegenstand der Erfindung sind somit thermoplastische Formmassen, enthaltend
A) 1 bis 95 Gew.-% eines thermoplastischen Polyesters, verschieden von Polybutylenterephtalat,
B) 1 bis 95 Gew.-% eines thermoplastischen Polybutylenterephtalats,
C) 1 bis 30 Gew.-% eines oder mehrer Phosphinsäuresalze der Formel (I) und/oder eines oder mehrerer Diphosphinsäuresalze der Formel (II) und/oder deren Polymere, 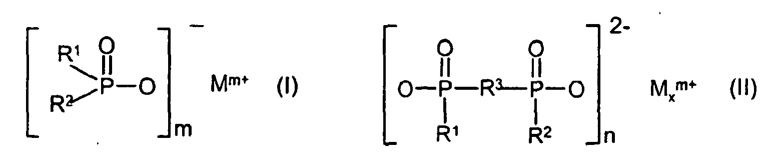 mit der Eigenschaft, dass sie bei Temperaturen unterhalb von 310°C, bevorzugt unterhalb von 280°C, besonders bevorzugt unterhalb von 250°C, ganz besonders bevorzugt unterhalb von 220°C aufschmelzen, und worin
   - R¹, R²: gleich oder verschieden sind und für Wasserstoff und/oder lineares oder verzweigtes C₁-C₂₀-Alkyl, und/oder für Aryl stehen,
   - R³: für lineares oder verzweigtes C₁-C₁₀-Alkylen, C₆-C₁₀-Arylen oder für C₁-C₆- Alkylarylen oder Aryl-C₁-C₆-alkylen steht,
   - M: für Erdalkalimetalle, Alkalimetalle, Aluminium, Zink, Titan, Zirkon, Silizium, Zinn und/oder eine protonierte Stickstoffbase steht,
   - m: für 1 bis 4 steht,
   - n: für 1 bis 3 steht und
   - x: für 1 und 2 steht,
D) 0,5 bis 25 Gew.-%, bevorzugt 1 bis 20 Gew.-%, besonders bevorzugt 5 bis 15 Gew.-% Melaminpolyphosphat.

In einer bevorzugten Ausführungsform können die thermoplastischen Formmassen zusätzlich zu den Komponenten A) bis D) noch E) 0,1 bis 10 Gew.-%, bevorzugt 0,5 bis 5 Gew.-% besonders bevorzugt 0,75 bis 3,5 Gew.-% mindestens einer sauerstoff-, stickstoff- oder schwefelhaltigen Metallverbindung, bevorzugt der zweiten Haupt- oder Nebengruppe, besonders bevorzugt Ca, Mg oder Zn, ganz besonders bevorzugt Zinkoxid und/oder Zinksulfid enthalten.

In einer weiteren bevorzugten Ausführungsform können die thermoplastischen Formmassen zusätzlich zu den Komponenten A) bis E) oder anstelle von E) noch die Komponente F) 0,1 bis 60 Gew.-%, bevorzugt 1 bis 50 Gew.-%, besonders bevorzugt 10 bis 40 Gew.-% eines oder mehrerer Füll- und Verstärkungsstoffe enthalten.

In einer weiteren bevorzugten Ausführungsform können die thermoplastischen Formmassen zusätzlich zu den Komponenten A) bis F) oder anstelle von E) oder F) noch G) 0,01 bis 5 Gew.-%, bevorzugt 0,05 bis 3 Gew.-%, besonders bevorzugt 0,1 bis 2 Gew.-% mindestens eines Gleit- und/oder Entformungsmittels enthalten.

In einer weiteren bevorzugten Ausführungsform können die thermoplastischen Formmassen zusätzlich zu den Komponenten A) bis G) oder anstelle der Komponenten E), F) oder G) noch H) 0,01 bis 40 Gew.-%, bevorzugt 0,01 bis 20 Gew.-%, besonders bevorzugt 0,1 bis 15 Gew.-% jeweils bezogen auf die Gesamtzusammensetzung weitere Additive enthalten.

Die Summe der Anteile der Komponenten ergänzt sich jeweils zu 100 Gew.-%.

Unter thermoplastischen Polymeren werden laut Hans Domininghaus in "Die Kunststoffe und ihre Eigenschaften", 5. Auflage (1998), S. 14, Polymere verstanden, deren Molekülketten keine oder auch mehr oder weniger lange und in der Anzahl unterschiedliche Seitenverzweigungen aufweisen, die in der Wärme erweichen und nahezu beliebig formbar sind.

Erfindungsgemäß sind also folgende Kombinationen der Komponenten denkbar: ABCD, ABCDE, ABCDEF, ABCDEFG, ABCDF, ABCDFG, ABCDG, ABCDH, ABCDEG, ABCDEH, ABCDFH, ABCDEFH, ABCDEGH, ABCDFGH, ABCDEFGH.

Als Komponente A) enthalten die thermoplastischen Formmassen erfindungsgemäß mindestens einen thermoplastischen Polyester, vorzugsweise teilaromatische Polyester, verschieden von Polybutylenterephthalat.

Die erfindungsgemäß als Komponente A) einzusetzenden thermoplastischen, bevorzugt teilaromatischen, Polyester sind ausgewählt aus der Gruppe der Polyalkylenterephthalate mit Ausnahme der Polybutylenterephthalate, bevorzugt ausgewählt aus der Gruppe der Polyethylenterephthalate und der Polytrimethylenterephthalate, besonders bevorzugt der Polyethylenterephthalate.

Unter teilaromatischen Polyestern versteht man Materialien, die neben aromatischen Molekülteilen auch aliphatische Molekülteile enthalten.

Polyalkylenterephthalate im Sinne der Erfindung sind Reaktionsprodukte aus aromatischen Dicarbonsäuren oder ihren reaktionsfähigen Derivaten (z.B. Dimethylestem oder Anhydriden) und aliphatischen, cycloaliphatischen oder araliphatischen Diolen und Mischungen dieser Reaktionsprodukte.

Erfindungsgemäß bevorzugt einzusetzende Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Erfindungsgemäß bevorzugt einzusetzende Polyalkylenterephthalate enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykol- und/oder Propandiol-1,3-reste.

Die erfindungsgemäß bevorzugt einzusetzenden Polyalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure. Die erfindungsgemäß bevorzugt einzusetzenden Polyalkylenterephthalate können neben Ethylen- bzw. Propandiol-1,3-glykolresten bis zu 20 Mol-% andere aliphatische Diole mit 3 bis 12 C-Atomen oder cycloaliphatische Diole mit 6 bis 21 C-Atomen enthalten, z.B. Reste von Butandiol-1,4, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-bis-(3-β-hydroxyethoxyphenyl)-propan oder 2,2-bis-(4-hydroxypropoxyphenyl)-propan (DE-A 24 07 674 (= US 4 035 958), DE-A 24 07 776, DE-A 27 15 932 (=US 4 176 224)).

Die erfindungsgemäß einzusetzenden Polyalkylenterephthalate können durch Einbau relativ kleiner Mengen 3- oder 4-wertiger Alkohole oder 3- oder 4-basischer Carbonsäuren, wie sie z.B. in der DE-A 19 00 270 (= US-A 3 692 744) beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekomponente, zu verwenden.

Erfindungsgemäß besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 hergestellt werden (Polyethylen- und Polytrimethylenterephthalat), und Mischungen dieser Polyalkylenterephthalate.

Erfindungsgemäß bevorzugt einzusetzende Polyalkylenterephthalate sind auch Copolyester, die aus mindestens zwei der obengenannten Säurekomponenten und/oder aus mindestens zwei der obengenannten Alkoholkomponenten und/oder Butandiol-1,4 hergestellt werden. Besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,3 cm³/g bis 1,5 cm³/g, vorzugsweise 0,4 cm³/g bis 1,3 cm³/g, besonders bevorzugt 0,5 cm³/g bis 1,0 cm³/g jeweils gemessen in Phenol/o-Dichlorbenzol (1:1 Gew.-Teile) bei 25°C.

Die als Komponente A) erfindungsgemäß einzusetzenden thermoplastischen Polyester können auch im Gemisch mit anderen Polyestern und/oder weiteren Polymeren eingesetzt werden.

Als Komponente B) enthalten die thermoplastischen Formmassen erfindungsgemäß Polybutylenterephthalat.

Polybutylenterephthalate im Sinne der Erfundung lassen sich aus Terephthalsäure (oder ihren reaktionsfähigen Derivaten) und Butandiol-1,4 nach bekannten Methoden herstellen (Kunststoff-Handbuch, Bd. VIII, S. 695 FF, Karl-Hanser-Verlag, München 1973).

Bevorzugte Polybutylenterephthalate enthalten mindestens 80 Mol-%, vorzugsweise 90 Mol-%, bezogen auf die Dicarbonsäure, Terephthalsäurereste und mindestens 80 Mol-%, vorzugsweise mindestens 90 Mol-%, bezogen auf die Diolkomponente Butandiol-1,4-reste.

Die bevorzugten Polybutylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polybutylenterephthalate können des weiteren neben Butandiol-1,4-resten bis zu 20 Mol-% anderer aliphatischer Diole mit 2 bis 12 C-Atomen oder cycloaliphatischer Diole mit 6 bis 21 C-Atomen enthalten, z.B. Reste von Ethylenglycol, Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674 (= US 4 035 958), DE-A 24 07 776, DE-A 27 15 932 (=US 4 176 224)).

Die Polybutylenterephthalate können durch Einbau relativ kleiner Mengen 3- oder 4-wertiger Alkohole oder 3- oder 4-basischer Carbonsäure, wie sie z.B. in der DE-A 19 00 270 (= USA 3 692 744) beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polybutylenterephthalate, die allein aus Terephthalsäure und deren reaktionsfähigen Derivaten (z.B. deren Dialkylestern) und Butandiol-1,4 hergestellt werden.

Die als Komponente B) einzusetzenden Polybutylenterephthalate besitzen im allgemeinen eine intrinsische Viskosität von ca. 0,3 cm³/g bis 1,5 cm³/g, vorzugsweise 0,4 cm³/g bis 1,3 cm³/g, besonders bevorzugt 0,5 cm³/g bis 1,0 cm³/g jeweils gemessen in Phenol/o-Dichlorbenzol (1:1 Gew.-Teile) bei 25°C.

Als Komponente C) enthalten die Formmassen erfindungsgemäß eines oder mehrere Phosphinsäuresalze der Formel (I) und/oder eines oder mehrere Diphosphinsäuresalze der Formel (II) und/oder deren Polymere, mit der Eigenschaft, dass sie bei Temperaturen unterhalb 310°C, bevorzugt unterhalb von 280°C, besonders bevorzugt unterhalb von 250°C, ganz besonders bevorzugt unterhalb von 220°C aufschmelzen, und worin
- R¹, R²: gleich oder verschieden sind und für Wasserstoff und/oder lineares oder verzweigtes C₁- C₂₀-Alkyl und/oder für Aryl stehen,
- R³: für lineares oder verzweigtes C₁-C₁₀-Alkylen, C₆-C₁₀-Arylen und/oder für C₁-C₆- Alkylarylen oder für Aryl-C₁-C₆-alkylen steht,
- M: für Erdalkalimetalle, Alkalimetalle, Aluminium, Zink, Titan, Zirkon, Silizium, Zinn und/oder eine protonierte Stickstoffbase steht,
- m: für 1 bis 4 steht,
- n: für 1 bis 3 steht und
- x: für 1 und 2 steht.

Bevorzugt steht M für Magnesium, Calcium, Aluminium, Titan und/oder Zink, besonders bevorzugt für Zink oder Titan, ganz besonders bevorzugt für Zink. Unter protonierten Stickstoffbasen werden bevorzugt die protonierten Basen von Ammoniak, 1,3,5-Triazinverbindungen und Triethanolamin, besonders bevorzugt Melamin verstanden. Bevorzugt sind R¹, R² gleich oder verschieden und bedeuten lineares oder verzweigtes C₁-C₁₈-Alkyl und/oder Phenyl. Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl. Bevorzugt bedeutet R³ Methylen, Ethylen, N-Propylen, iso-Propylen, n-Butylen, tert.-Butylen, n-Pentylen, n-Octylen, n-Dodecylen, Phenylen, Naphthylen, Methyl-phenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet R³ Phenylen oder Naphthylen. Geeignete Phosphinate sind in der WO-A 97/39053 beschrieben, deren Inhalt in Bezug auf die Phosphinate von der vorliegenden Anmeldung mit umfasst wird. In WO 97/39 053 wird der Begriff "Phosphinsäuresalz" für Salze der Phosphin- und Diphosphinsäuren und deren Polymere verwendet.

Die Phosphinsäuresalze, die in wässrigem Medium hergestellt werden, sind demnach im wesentlichen monomere Verbindungen. In Abhängigkeit von den Reaktionsbedingungen können unter Umständen auch polymere Phosphinsäuresalze entstehen.

Gemäß WO 97/39 053 geeignete Phosphinsäuren als Bestandteil der Phosphinsäuresalze sind beispielsweise:

Dimethylphosphinsäure, Ethyl-methylphosphinsäure, Diethylphosphinsäure, Methyl-n-propylphosphinsäure, Methan-di(methylphosphinsäure), Benzol-1,4-(dimethylphosphinsäure), Methylphenyl-phosphinsäure, Diphenylphosphinsäure. Die Salze der Phosphinsäuren können nach bekannten Methoden hergestellt werden, die in der EP-A-699 708 näher beschrieben sind. Die Phosphinsäuren werden dabei in wässriger Lösung mit Metallcarbonaten, Metallhydroxiden oder Metalloxiden umgesetzt. Besonders bevorzugte Phosphinate im Sinne der vorliegenden Erfindung sind deshalb Zinksalze des Dimethylphosphinats, des Ethylmethylphosphinats, des Diethylphosphinats und des Methyl-n-propylphosphinats sowie deren Mischungen. Ganz besonders bevorzugt sind die Zinksalze des Diethylphosphinats (Zink-bis[diethylphosphinat]).

Bevorzugt steht m für 2 oder 3, besonders bevorzugt für 2

Bevorzugt steht n für 1 oder 3, besonders bevorzugt für 1

Bevorzugt steht x für 1 oder 2, besonders bevorzugt für 1

Als erfindungsgemäß einzusetzende Komponente D) enthalten die Formassen

Melaminpolyphosphat. Melaminpolyphosphat ist in diversen Produktqualitäten kommerziell verfügbar. Beispiele hierfür sind u.a. Melapur^{®} 200/70 (Fa. CIBA Melapur, Basel, Schweiz) sowie Budit^{®} 3141 (Fa. Budenheim, Budenheim, Deutschland).

Die erfindungsgemäßen Zusammensetzungen können gegebenenfalls als Komponente E) mindestens eine sauerstoff-, stickstoff- oder schwefelhaltige Metallverbindung enthalten. Hierzu zählen erfindungsgemäß z.B. Bornitrid, Titannitrid, Titandioxid und Böhmit, insbesondere nanoskaliges Böhmit. Bevorzugte Metallverbindungen sind auch solche der zweiten Haupt- oder Nebengruppe. Dazu zählen erfindungsgemäß ZnO, insbesondere aktiviertes ZnO (z.B. Bayer AG, Leverkusen, Deutschland), ZnS, MgCO₃, CaCO₃, Zinkborat, CaO, MgO, Mg(OH)₂, , Mg₃N₂, Zn₃N₂, Zn₃(PO₄)₂, Ca₃(PO₄)₂, Calciumborat, Magnesiumborat oder deren Mischungen. Erfindungsgemäß besonders bevorzugte Metalle sind Ca, Mg oder Zn, insbesondere Zinkborat und Zinksulfid, wobei Zinksulfid ganz besonders bevorzugt ist. Das Zinksulfid wird in der Regel als partikelförmiger Feststoff eingesetzt. Unter dem Begriff Zinkborat im Rahmen der vorliegenden Erfindung sollen Substanzen verstanden werden, die aus Zinkoxid und Borsäure zugänglich sind. Es sind verschiedene Hydrate der Zinkborate bekannt, z.B. ZnO·B₂O₃·2H₂O und 2 ZnO·3 B₂O₃·3,5 H₂O, wobei Verbindungen der beiden vorgenannten Zusammensetzungen bevorzugt sind. Beispiele für einsetzbare Zinkborate sind in Gmelin Syst.-Nr.32, Zn, 1924, S. 248, Erg.-Bd., 1956, S. 971-972, Kirk-Othmer (4.) 4, 407-408, 10, 942; Ullmann (5.) A 4, 276; Winnacker-Küchler (4.) 2, 556 beschrieben.

Ebenso können die Komponenten E) als kompaktiertes Material sowie als Masterbatches in einem polymeren Trägermaterial eingesetzt werden. Die Komponenten E) können ferner oberflächenbehandelt bzw. mit bekannten Mitteln beschichtet sein. Hierzu zählen u.a. organische Verbindungen, die in monomerer, oligomerer und/oder polymerer Form aufgebracht sein können. Beschichtungen mit anorganischen Komponenten sind ebenfalls möglich.

In einer bevorzugten Ausführungsform können die Formmassen zusätzlich zu den Komponenten A) bis D) und gegebenenfalls E) als Komponente F) noch Füll- und Verstärkungsstoffe enthalten. Es kann aber auch eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern enthalten sein. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden erfindungsgemäß mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert werden, wie beispielsweise in Kfz-Anwendungen für Karosserieaußenteile, werden bevorzugt mineralische Füllstoffe eingesetzt, insbesondere Talk, Wollastonit oder Kaolin.

Besonders bevorzugt können ferner auch nadelförmige mineralische Füllstoffe als Komponente F) eingesetzt werden. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm bestimmt mit einem CILAS GRANULOMETER.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die als Komponente F) gegebenenfalls erfindungsgemäß besonders bevorzugt einzusetzenden Glasfasern, die im allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen beispielsweise der allgemeinen Formel (I)

(I) (X-(CH₂)_{q})ₖ-Si-(O-CᵣH₂ᵣ₊₁)₄₋ₖ

in der die Substituenten folgende Bedeutung haben:
- X:: NH₂-, HO-,

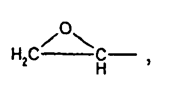

- q:: eine ganze Zahl von 2 bis 10, bevorzugt 3 bis 4,
- r:: eine ganze Zahl von 1 bis 5, bevorzugt 1 bis 2,
- k:: eine ganze Zahl von 1 bis 3, bevorzugt 1.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer weiteren alternativen bevorzugten Ausführungsform können die Formmassen zusätzlich zu den Komponenten A) bis D) und gegebenenfalls E) und/oder F) als Komponente G) auch mindestens ein Gleit- und Entformungsmittel enthalten. Hierzu eignen sich beispielsweise langkettige Fettsäuren (z.B. Stearinsäure oder Behensäure), deren Salze (z.B. Ca- oder Zn-Stearat) sowie deren Esterderivate oder Amidderivate (z.B. Ethylen-bis-stearylamid), Montanwachse (Mischungen aus geradkettigen, gesättigten Carbonsäuren mit Kettenlängen von 28 bis 32 C-Atomen) sowie niedermolekulare Polyethylen- bzw. Polypropylenwachse. Erfindungsgemäß werden bevorzugt Gleit- und/oder Entformungsmittel aus der Gruppe der niedermolekularen Polyethylenwachse sowie der Ester gesättigter oder ungesättigter aliphatischer Carbonsäuren mit 8 bis 40 C-Atomen mit aliphatischen gesättigten Alkoholen mit 2 bis 40 C-Atomen eingesetzt, wobei Pentaerythrit-tetrastearat (PETS) ganz besonders bevorzugt ist.

In einer weiteren alternativen bevorzugten Ausführungsform können die Formmassen zusätzlich zu den Komponenten A) bis D) und gegebenenfalls E) und/oder F) und/oder G) als Komponente H) noch weitere Additive enthalten. Übliche Additive sind z.B. Stabilisatoren (zum Beispiel UV-Stabilisatoren, Thermostabilisatoren, Gammastrahlenstabilisatoren, Hydrolysestabilisatoren), Antistatika, weitere Flammschutzmittel, Emulgatoren, Nukleierungsmittel, Weichmacher, Verarbeitungshilfsmittel, Schlagzähmodifikatoren, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden oder vorweg der Komponente A) in der Schmelze zugemischt oder auf deren Oberfläche aufgebracht werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als UV-Stabilisatoren seien verschiedene substituierte Resorcine, Salicylate, Benzotriazole und Benzophenone genannt.

Im Falle von Schlagzähmodifikatoren (Elastomermodifikatoren, Modifikatoren) handelt es sich ganz allgemein um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Es können anorganische Pigmente, wie Titandioxid, Ultramarinblau, Eisenoxid, Zinksulfid und Ruß, weiterhin organische Pigmente, wie Phthalocyanine, Chinacridone, Perylene sowie Farbstoffe, wie Nigrosin und Anthrachinone als Farbmittel sowie andere Farbmittel zugesetzt werden. Im Rahmen der vorliegenden Erfindung ist die Verwendung von Ruß bevorzugt.

Als Nukleierungsmittel können z.B. Natrium- oder Calciumphenylphosphinat, Aluminiumoxid oder Siliziumdioxid sowie bevorzugt Talkum eingesetzt werden.

Als Verarbeitungshilfsmittel können zum Beispiel Copolymerisate aus mindestens einem α-Olefin mit mindestens einem Methacrylsäurester oder Acrylsäureester eines aliphatischen Alkohols eingesetzt werden. Bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 4 bis 20C-Atomen enthält. Besonders bevorzugt ist Acrylsäurebutylester und Acrylsäure-(2-ethyl)-hexylester.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Als weitere Flammschutzmittel kommen z.B. phosphorhaltige Flammschutzmittel ausgewählt aus den Gruppen der mono- und oligomeren Phosphor- und Phosphonsäureester, Phosphonatamine, Phosphonate, Phosphite, Hypophosphite, Phosphinoxide und Phosphazene, wobei auch Mischungen von mehreren Komponenten ausgewählt aus einer oder verschiedenen dieser Gruppen als Flammschutzmittel zum Einsatz kommen können, in Frage. Auch andere hier nicht speziell erwähnte halogenfreie Phosphorverbindungen können alleine oder in beliebiger Kombination mit anderen vorzugsweise halogenfreien Phosphorverbindungen eingesetzt werden. Hierzu zählen auch rein anorganische Phosphorverbindungen wie Borphosphathydrat oder roter Phosphor. Als weitere stickstoffhaltige Flammschutzmittel kommen solche aus der Gruppe der Allantoin-, Cyanursäure-, Dicyandiamid, Glycouril-, Guanidin- Ammonium- und Melaminderivate, bevorzugt Allantoin, Benzoguanamin, Glykouril, Melamin, Kondensationsprodukte des Melamins z.B. Melem, Melam oder Melom bzw. höher kondensierte Verbindungen dieses Typs und Addukte des Melamins mit weiteren Säuren wie z.B. mit Cyanursäure (Melamincyanurat) in Betracht. Als Synergisten sind z.B. Antimonverbindungen, insbesondere Antimontrioxid, Natriumantimonat und Antimonpentoxid und Zinnverbindungen wie z.B. Zinnstannat und Zinnborat geeignet. Ferner können auch Salze aliphatischer und aromatischer Sulfonsäuren und mineralische Flammschutzadditive wie Aluminium- und/oder Magnesiumhydroxid, Ca-Mg-Carbonat-Hydrate (z.B. DE-A 4 236 122) Molybdänoxid sowie weitere Zinksalze und Magnesiumsalze eingesetzt werden. Auch können den Formmassen sogenannte Kohlenstoffbildner wie z.B Phenol-Formaldehydharze, Polycarbonate, Polyphenylether, Polyimide, Polysulfone, Polyethersulfone, Polyphenylsulfide und Polyetherketone sowie Antitropfmittel wie Tetrafluorethylenpolymerisate als Flammschutzkomponente zugesetzt werden.

Die vorliegende Erfindung betrifft aber auch die Fasern, Folien und Formkörper, durch übliche technische Verfahren erhältlich aus den erfindungsgemäß beschriebenen thermoplastischen Formmassen enthaltend die Komponenten A) bis D)sowie in bevorzugten Ausführungen noch gegebenenfalls E), F), G) und/oder H).

Schließlich betrifft die vorliegende Erfindung auch ein Verfahren zur Herstellung von Fasern, Folien und Formkörpern, **dadurch gekennzeichnet, dass** man Formmassen, enthaltend die Komponenten A bis D) sowie in bevorzugten Ausführungen noch gegebenenfalls E), F), G) und/oder H), einsetzt.

Die erfindungsgemäßen Formmassen können nach üblichen Verfahren, beispielsweise durch Spritzguss oder Extrusion, zu Formteilen, Fasern oder Halbzeugen verarbeitet werden. Beispiele für Halbzeuge sind Folien und Platten. Besonders bevorzugt ist die Spritzgießverarbeitung.

Die erfindungsgemäß aus den thermoplastischen Formmassen herzustellenden Formteile oder Halbzeuge können klein- oder großteilig sein und beispielsweise in der Kraftfahrzeug-, Elektro-, Elektronik-, Telekommunikations-, Informationstechnologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen die einen erhöhten Brandschutz erfordern angewandt werden.

Ein weiteres Anwendungsbeispiel ist die Verarbeitung der Formmassen über sogenannte Multiwerkzeuge, bei denen über ein Angusssystem mindestens 4 Formen, bevorzugt mindestens 8 Formen, besonders bevorzugt mindestens 12 Formen, am meisten bevorzugt mindestens 16 Formen in einem Spritzgussvorgang gefüllt werden.

### Beispiele

Zum Nachweis der erfindungemäß beschriebenen Verbesserungen bei Flammwidrigkeit und Mechanik wurden zunächst durch Compoundierung entsprechende Kunststoff-Formmassen angefertigt. Die einzelnen Komponenten wurden hierzu in einem Zweiwellenextruder (ZSK 32 Mega Compounder der Fa. Coperion Werner & Pfleiderer (Stuttgart, Deutschland)) bei Temperaturen zwischen 270 und 335°C gemischt, als Strang ausgetragen, bis zur Granulierfähigkeit abgekühlt und granuliert. Nach dem Trocknen (in der Regel 2h bei 120°C im Vakuumtrockenschrank) erfolgte die Verarbeitung des Granulates zu Prüfkörpern.

Die Prüfkörper für die in den Tabellen 1 - 2 aufgeführte Untersuchungen wurden auf einer Spritzgießmaschine des Typs Arburg 320-210-500 bei einer Massetemperatur von ca. 270°C und einer Werkzeugtemperatur von ca. 90°C verspritzt:
- Prüfstäbe 80x10x4 mm (gem. ISO 178 bzw. ISO180/1U)
- ASTM-Normprüfkörper für die UL94V-Prüfung
- Prüfkörper für die Glühdrahtprüfung nach DIN EN 60695-2-1

Die Flammwidrigkeit der Formmassen wurde zum einen nach der Methode UL94V (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit wurde anhand der Glühdrahtprüfung GWFI (Glow-Wire Flammability-Index) nach IEC 60695-2-12 sowie an der Glühdrahtentzündlichkeitsprüfung GWIT (Glow-Wire-Ignition-Temperature) nach 60695-2-13 bestimmt. Bei der GWFI-Prüfung wird an 3 Prüfkörpern (beispielsweise an Platten der Geometrie 60 x 60 x 1,5 mm) mit Hilfe eines glühenden Drahtes bei Temperaturen zwischen 550 und 960°C die maximale Temperatur ermittelt, bei der eine Nachbrennzeit von 30 Sekunden nicht überschritten wird und die Probe nicht brennend abtropft. Bei der GWIT-Prüfung wird bei einer vergleichbaren Messprozedur die Glühdrahtentzündungstemperatur angegeben, die 25K (30K zwischen 900°C und 960°C) höher ist als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit ≥ 5sec.

Mechanische Kennwerte erhielt man aus Schlagzähigkeitsmessungen nach IZOD (ISO 180/1U, 23°C) oder aus Biegeexperimenten gemäß ISO 178 (Biegemodul, Randfaserdehnung und Biegefestigkeit).

In den Versuchen wurde verwendet:
Komponente A: Lineares Polyethylenterephthalat mit einer intrinsischen Viskosität von ca. 0,74 cm³/g (gemessen in Phenol : 1,2-Dichlorbenzol = 1:1 bei 25°C)
Komponente B: Lineares Polybutylenterephthalat (Pocan^{®} B 1300, Handelsprodukt der Lanxess Deutschland GmbH, Leverkusen, Deutschland) mit einer intrinsischen Viskosität von ca. 0,93 cm³/g (gemessen in Phenol : 1,2-Dichlorbenzol = 1:1 bei 25°C)
Komponente C: Zink-bis[diethylphosphinat] (Exolit^{®} OP950 der Clariant GmbH, Frankfurt am Main, Deutschland)
Komponente V/1: System nach Formel (I) mit R¹ = R² = Ethyl und M = Aluminium [gemäß EP-A 803508 / EP-A 944637]
Komponente V/2: Melamincyanurat, (Melapur®, der Fa. CIBA, Basel, Schweiz)
Komponente D: Melaminpolyphosphat (Melapur^{®} 200/70 der Fa. CIBA, Basel, Niederlande)
Komponente E: Zinksulfid
Komponente F: Mit silanhaltigen Verbindungen beschlichtete Glasfaser mit einem Durchmesser von 10 µm (CS 7967, Handelsprodukt der Lanxess N.V., Antwerpen, Belgien)
Komponente G: Für die Verwendung in thermoplastischen Polyestern gebräuchliche Entformungsmittel wie z.B. Polyethylenwachs oder Pentaerythrit-tetrastearat (PETS)

Die verwendeten Entformungsmittel (Komponente G) stimmen für entsprechende Vergleichsbeispiele und Beispiele jeweils in Art und Menge überein, und zwar mit G = 0,3.
Komponente H: weitere Additive

Als weitere Additive wurden die folgenden, für die Verwendung in thermoplastischen Polyestern gebräuchlichen Komponenten eingesetzt:
Nukleierungsmittel: Talkum [CAS-Nr. 14807-96-6] in Mengen von 0,05 bis 0,65 Gew.-%.
Thermostabilisator: Übliche Stabilisatoren auf Basis von Phenylphosphiten in Mengen von 0,05 bis 0,65 Gew.-%.

Die verwendeten weiteren Additive (Komponente H) stimmen für entsprechende Vergleichsbeispiele und Beispiele jeweils in Art und Menge überein, und zwar mit H = 0,7 Gew.-%.

Die Summe der Anteile der Komponenten ergänzt sich zu 100 Gew.-%.

**Tabelle 1**

| Komponente | **Bsp. 1** | **Bsp. 2** | **Vgl. 3** | **Vgl. 4** |
|---|---|---|---|---|
| A | 19 | 19 | 20 | 19 |
| B . | 29,5 | 29,5 | 29 | 29 |
| C | 10 | 8 | 10 | 10 |
| V/1 | | | | |
| D | 10 | 12 | | |
| V/2 | | | 10 | 15 |
| E | 0,5 | 0,5 | | |
| F | 30 | 30 | 30 | 30 |
| G | 0,3 | 0,3 | 0,3 | 0,3 |
| H | 0,7 | 0,7 | 0,7 | 0,7 |
| UL 94 (0.8 /1.6 mm) | V2/V0 | V0/V0 | -/n.b. | -/V2 |
| GWFI (1.5 mm) | 960°C | 960°C | 960°C (2,1) | 960°C |
| GWIT (1.5 mm) | 775°C | 960°C | - | >775°C |
| CTI A [V] | 600 | 600 | - | - |
| IZOD Schlagzähigkeit (ISO 180/lU 23 °C) | 46 kJ/m² | 33 kJ/m² | 37,3 kJ/m² | 29 kJ/m² |
| Biegefestigkeit [MPa] | 185 | 170 | 175 | 158 |
| Randfaserdehnung bei Höchstkraft [%] | 2,9 | 2,3 | 2,3 | 2,0 |
| Biegemodul [MPa] | 9700 | 9600 | 9800 | 10600 |

| | | | | |
|---|---|---|---|---|
| Angaben der Komponenten in Gew.-% bezogen auf die Gesamtformmasse | | | | |

**Tabelle 2**

| Komponente | **Vgl. 5** | **Vgl. 6** | **Vgl. 7** |
|---|---|---|---|
| A | 20 | 20 | 0 |
| B | 29 | 26,5 | 49 |
| C | | | |
| V/1 | 6,5 | 22,5 | 10 |
| D | 3,5 | | |
| V/2 | 10 | | 10 |
| E | | | |
| F | 30 | 30 | 30 |
| G | 0,3 | 0,3 | 0,3 |
| H | 0, 7 | 0,7 | 0,7 |
| UL 94 (0.8 /1.6 mm) | V2/V0 | V0/V0 | V0/V0 |
| GWFI (1.5 mm) | 960°C | - | - |
| GWIT (1.5 mm) | 750°C | >775°C | - |
| CTI A [V] | 500 | - | - |
| IZOD Schlagzähigkeit (ISO 180/1U 23 °C) | 29 kJ/m² | 26 kJ/m² | 23kJ/m² |
| Biegefestigkeit [MPa] | 175 | 153 | 137 |
| Randfaserdehnung bei Höchstkraft [%] | 1,9 | 1,7 | 1,9 |
| Biegemodul [MPa] | 11300 | 11300 | 10300 |

Tabelle 1 bis 2 zeigen, dass nur die spezielle erfindungsgemäße Kombination in Bsp. 1 und Bsp. 2 sowohl hinsichtlich der Flammwidrigkeit (UL94 V0 und GWIT 775°C mindestens bei 1,5mm) als auch in der Mechanik (IZOD-Schlagzähigkeit >31kJ/m² und Randfaserdehnung mindestens 2,3%) gegenüber dem Stand der Technik sehr gute Werte zeigt. Bei Austausch der Komponente D durch V/2 wird UL94 V0 auch dann nicht mehr erfüllt, wenn man die Konzentration an V/2 erhöht [Vgl. 3 und Vgl. 4]. Ein Austausch von C und D durch V/1 führt zwar zu einer guten Flammwidrigkeit, allerdings nimmt dabei Randfaserdehnung und Schlagzähigkeit drastisch ab [Vgl. 6]. Selbiges gilt auch für Kombinationen aus V/1, D und V/2 in [Vgl. 5]. Hervorzuheben ist auch, dass eine Kombination gemäß dem Stand der Technik aus V/1 und V/2, aber unter Verzicht auf Komponente A zwar ebenfalls gute Flammwidrigkeiten zeigt, hinsichtlich Mechanik und Schlagzähigkeit aber sehr unbefriedigend ist [Vgl. 7 ].

## Patentansprüche

1. Thermoplastische Formmassen enthaltend
A) 1 bis 95 Gew.-% eines thermoplastischen Polyesters, verschieden von Polybutylenterephthalat,
B) 1 bis 95 Gew.-% eines thermoplastischen Polybutylenterephthalats,
C) 1 bis 30 Gew.-% eines oder mehrer Phosphinsäuresalze der Formel (I) und/oder eines oder mehrerer Diphosphinsäuresalze der Formel (II) und/oder deren Polymere, 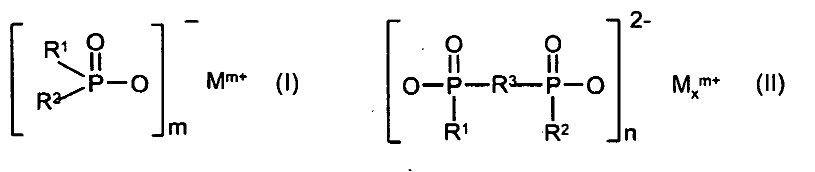 mit der Eigenschaft, dass sie bei Temperaturen unterhalb von 310°C aufschmelzen, und worin
R¹, R² gleich oder verschieden sind und für Wasserstoff und/oder lineares oder verzweigtes C₁-C₂₀-Alkyl, und/oder für Aryl stehen,
R³ für lineares oder verzweigtes C₁-C₁₀-Alkylen, C₆-C₁₀-Arylen oder für C₁-C₆- Alkylarylen oder Aryl-C ₁-C₆-alkylen steht,
M für Erdalkalimetalle, Alkalimetalle, Aluminium, Zink, Titan, Zirkon, Silizium, Zinn und/oder eine protonierte Stickstoffbase steht,
m für 1 bis 4 steht,
n für 1 bis 3 steht und
x für 1 und 2 steht,
D) 0,5 bis 25 Gew.-% Melaminpolyphosphat.

2. Thermoplastische Formmassen gemäß Anspruch 1, **dadurch gekennzeichnet, dass** diese zusätzlich zu den Komponenten A) bis D) noch E) 0,1 bis 10 Gew.-% mindestens einer sauerstoff-, stickstoff- oder schwefel-haltigen Metallverbindung, enthalten.

3. Thermoplastische Formmassen gemäß Anspruch 2, **dadurch gekennzeichnet, dass** diese zusätzlich zu den Komponenten A) bis E) oder anstelle von E) noch die Komponente F) 0,1 bis 60 Gew.-% eines oder mehrerer Füll- und Verstärkungsstoffe enthalten.

4. Thermoplastische Formmassen gemäß Anspruch 3, **dadurch gekennzeichnet, dass** diese zusätzlich zu den Komponenten A) bis F) oder anstelle von E) oder F) noch G) 0,01 bis 5 Gew.-% mindestens eines Gleit- und/oder Entformungsmittels enthalten.

5. Thermoplastische Formmassen gemäß Anspruch 4, **dadurch gekennzeichnet, dass** diese zusätzlich zu den Komponenten A) bis G) oder anstelle der Komponenten E), F) oder G) noch H) 0,01 bis 40 Gew.-% jeweils bezogen auf die Gesamtzusammensetzung weitere Additive enthalten.

6. Verfahren zur Herstellung der thermoplastischen Formmassen gemäß der Ansprüche 1 bis 5, **dadurch gekennzeichnet, dass** man die Komponenten in den genannten Gewichtsanteilen durch Schmelzextrusion vermischt.

7. Fasern, Folien und Formkörper erhältlich aus den thermoplastischen Formmassen gemäß der Ansprüche 1 bis 5 durch Spritzguss oder Extrusion.

8. Multiwerkzeuge erhältlich durch Füllen von mindestens 4 Formen mit Formmassen gemäß den Ansprüchen 1 bis 5 in einem Spritzgussvorgang über ein Angusssystem.

9. Verwendung der thermoplastischen Formmassen gemäß der Ansprüche 1 bis 5 zur Herstellung von Fasern, Folien und Formkörpern.

10. Verwendung der Fasern, Folien und Formkörper gemäß Anspruch 7 im Haushalt, der Industrie, in Medizin, in Kraftfahrzeugen, in Flugzeugen, in Schiffen, in Raumschiffen sowie in anderen Fortbewegungsmitteln, in Büroausstattungen sowie in Gegenständen und Gebäuden die einen erhöhten Brandschutz erfordern.

## Claims

1. Thermoplastic moulding compositions comprising
A) from 1 to 95% by weight of a thermoplastic polyester other than polybutylene terephthalate,
B) from 1 to 95% by weight of a thermoplastic polybutylene terephthalate,
C) from 1 to 30% by weight of one or more phosphinic salts of the formula (I) and/or of one or more diphosphinic salts of the formula (II) and/or their polymers 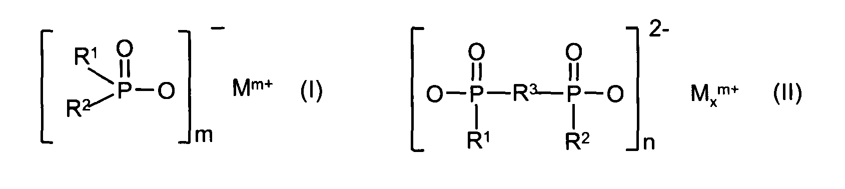 with the property of melting at temperatures below 310°C, and in which
R¹ and R² are identical or different and are hydrogen and/or linear or branched C₁-C₂₀- alkyl, and/or aryl,
R³ is linear or branched C₁-C₁₀-alkylene, C₆-C₁₀-arylene or C₁-C₆-alkylarylene or aryl-C₁-C₆-alkylene,
M is alkaline earth metals, alkali metals, aluminium, zinc, titanium, zirconium, silicon, tin and/or a protonated nitrogen base,
m is from 1 to 4,
n is from 1 to 3 and
x is 1 or 2,
D) from 0.5 to 25% by weight of melamine polyphosphate.

2. Thermoplastic moulding compositions according to Claim 1, **characterized in that** these also comprise E) from 0.1 to 10% by weight of at least one oxygen-, nitrogen- or sulphur-containing metal compound, in addition to components A) to D).

3. Thermoplastic moulding compositions according to Claim 2, **characterized in that** these also comprise component F) from 0.1 to 60% by weight of one or more fillers and reinforcing materials, in addition to components A) to E) or instead of E).

4. Thermoplastic moulding compositions according to Claim 3, **characterized in that** these also comprise G) from 0.01 to 5% by weight of at least one lubricant and/or mould-release agent, in addition to components A) to F) or instead of E) or F).

5. Thermoplastic moulding compositions according to Claim 4, **characterized in that** these also comprise H) from 0.01 to 40% by weight, in each case based on the entire composition, of further additives, in addition to components A) to G) or instead of components E), F) or G).

6. Process for preparation of the thermoplastic moulding compositions according to Claims 1 to 5, **characterized in that** the components are mixed in the proportions by weight mentioned via melt extrusion.

7. Fibres, foils and mouldings obtainable from the thermoplastic moulding compositions according to Claims 1 to 5 via injection moulding or extrusion.

8. Multitooling systems obtainable by charging moulding compositions according to Claims 1 to 5 by way of a runner system to at least 4 moulds in an injection-moulding procedure.

9. Use of the thermoplastic moulding compositions according to Claims 1 to 5 for production of fibres, foils and mouldings.

10. Use of the fibres, foils and mouldings according to Claim 7 in households, in industry, in medicine, in motor vehicles, in aircraft, in ships, in spacecraft, and also in other conveyances, in office equipment, and also in articles and buildings which require increased fire protection.

## Revendications

1. Matériaux de moulage thermoplastiques, contenant
A) 1 à 95 % en poids d'un polyester thermoplastique, différent du polybutylène téréphtalate,
B) 1 à 95 % en poids d'un polybutylène téréphtalate thermoplastique,
C) 1 à 30 % en poids d'un ou de plusieurs sels de l'acide phosphinique de formule (I) et/ou un ou plusieurs sels de l'acide diphosphinique de formule (II) et/ou leurs polymères 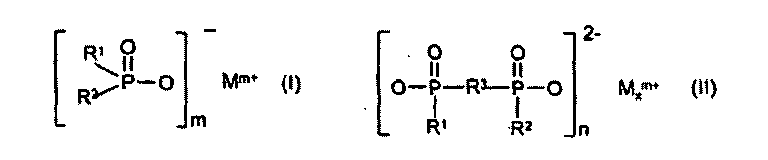 ayant la propriété qu'ils fondent à des températures inférieures à 310 °C,
et dans lesquelles
R¹, R² sont identiques ou différents et représentent l'hydrogène et/ou un alkyle en C₁-C₂₀ linéaire ou ramifié et/ou un aryle,
R³ représente un alkylène en C₁-C₁₀ linéaire ou ramifié, un arylène en C₆-C₁₀ ou un alkylarylène en C₁-C₆ ou un aryl-C₁-C₆-alkylène,
M représente des métaux alcalino-terreux, des métaux alcalins, l'aluminium, le zinc, le titane, le zirconium, le silicium, l'étain et/ou une base azotée protonée,
m représente 1 à 4,
n représente 1 à 3 et
x représente 1 et 2,
D) 0,5 à 25 % en poids de polyphosphate de mélamine.

2. Matériaux de moulage thermoplastiques selon la revendication 1, **caractérisés en ce que** ceux-ci contiennent, en plus des composants A) à D), également E) 0,1 à 10 % en poids d'au moins un composé métallique contenant de l'oxygène, de l'azote ou du soufre.

3. Matériaux de moulage thermoplastiques selon la revendication 2, **caractérisés en ce que** ceux-ci contiennent, en plus des composants A) à E) ou à la place de E), également le composant F) 0,1 à 60 % en poids d'une ou de plusieurs charges ou matières renforçantes.

4. Matériaux de moulage thermoplastiques selon la revendication 3, **caractérisés en ce que** ceux-ci contiennent, en plus des composants A) à F) ou à la place de E) ou F), également G) 0,01 à 5 % en poids d'au moins un agent lubrifiant et/ou de démoulage.

5. Matériaux de moulage thermoplastiques selon la revendication 4, **caractérisés en ce que** ceux-ci contiennent, en plus des composants A) à G) ou à la place du composant E), F) ou G), également H) 0,01 à 40 % en poids, à chaque fois par rapport à la totalité de la composition, d'additifs supplémentaires.

6. Procédé de fabrication des matériaux de moulage thermoplastiques selon les revendications 1 à 5, **caractérisé en ce que** les composants sont mélangés selon les proportions en poids mentionnées par extrusion à l'état fondu.

7. Fibres, feuilles et corps moulés pouvant être obtenus à partir des matériaux de moulage thermoplastiques selon les revendications 1 à 5 par moulage par injection ou extrusion.

8. Outils polyvalents pouvant être obtenus par remplissage d'au moins 4 moules avec des matériaux de moulage selon les revendications 1 à 5 dans un processus de moulage par injection par un système d'alimentation.

9. Utilisation des matériaux de moulage thermoplastiques selon les revendications 1 à 5 pour la fabrication de fibres, feuilles et corps moulés.

10. Utilisation des fibres, feuilles et corps moulés selon la revendication 7 dans le domaine ménager, dans l'industrie, en médecine, dans des automobiles, dans des avions, dans des navires, dans des navettes spatiales, ainsi que dans d'autres moyens de locomotion, dans des équipements de bureau, ainsi que dans des objets et des bâtiments qui nécessitent une protection supérieure contre le feu.
